# EUROPEAN PATENT APPLICATION

(11) **EP 4 722 418 A1**
(43) Date of publication of application: **08.04.2026**
(21) Application number: 25207013.1
(22) Date of filing: 06.10.2025
(51) Int. Cl.: C25B 1/04, C25B 9/75, C25B 15/00, C25B 9/77, C25B 15/02, C25B 15/023

(54) **SYSTEMS AND METHODS TO MONITOR MEMBRANES OF AN ELECTROLYSIS SYSTEM**

(30) Priority: 07.10.2024 US 202463704389 P
(71) Applicant: New Hydrogen IP, LLC, Columbus, Indiana 47201 (US)
(72) Inventor: Shrivastava, Udit N., East York, M4G 3A4 (CA); Sheth, Dhaval R., Indianapolis, 46237 (US); Fahy, Kieran, Toronto, M5N 1N8 (CA); St-Pierre, Jean, Indianapolis, 46237 (US); Mandal, Manas, Edmonton, T6K 2M1 (CA); Polanco, Ignacio, Belgium (BE); Yatam, Mounica, Rogers, 55374 (US)
(74) Representative: Marks & Clerk Cummins

(57) **Abstract**

An electrolysis system includes an electrolyzer cell stack and a pinhole monitoring system. The electrolyzer cell stack uses water and electricity to produce a hydrogen product gas and an oxygen product gas. The pinhole monitoring system is configured to monitor membranes included in the electrolyzer cell stack to detect a pinhole formed therein.

## Description

### TECHNICAL FIELD

The present disclosure relates to a pinhole monitoring system for use in an electrolysis system and methods of using the pinhole monitoring system.

### SUMMARY

Embodiments of the present disclosure are included to meet these and other needs.

The invention is defined in the accompanying claims.

In one aspect, described herein, an electrolysis system comprises an electrolyzer cell stack and a pinhole monitoring system. The electrolyzer cell stack is configured to use water and electricity to produce a hydrogen product gas and an oxygen product gas. The electrolyzer cell stack comprises a first cell and a second cell. The first cell has a first anode, a first cathode spaced apart from the first anode, and a first membrane arranged between the first anode and the first cathode. The second cell has a second anode, a second cathode spaced apart from the second anode, and a second membrane arranged between the second anode and the second cathode. The pinhole monitoring system is configured to monitor the first membrane and the second membrane to detect a pinhole formed therein. The pinhole monitoring system includes a controller configured to hold a current density of the electrolyzer cell stack at a first current density for a predetermined time period; decrease the current density of the electrolyzer cell stack to a second current density in response to holding the current density at the first current density for the predetermined time period; and determine that: the first membrane has the pinhole formed therein in response to a first voltage of the first cell being less than a voltage threshold while in the second current density, and/or the second membrane has the pinhole formed therein in response to a second voltage of the second cell being less than the voltage threshold while in the second current density.

In some embodiments, the first current density may be about 1.0 to about 2.0 A/cm². In some embodiments, the second current density may be about 5 mA/cm². In some embodiments, the voltage threshold may be about 0.8 V to about 1.4 V. In some embodiments, the controller may be configured to decrease the current density of the electrolyzer cell stack to a third current density less than the second current density in response to: the first voltage of the first cell being greater than the voltage threshold while in the second current density, or the second voltage of the second cell being greater than the voltage threshold while in the second current density.

In some embodiments, the controller may be configured to determine that: the first membrane has the pinhole formed therein in response to a third voltage of the first cell being less than the voltage threshold while in the third current density, and/or the second membrane has the pinhole formed therein in response to a fourth voltage of the second cell being less than the voltage threshold while in the third current density. In some embodiments, the controller may be configured to reverse a flow of water through the electrolyzer cell stack in response to: the first voltage of the first cell being greater than the voltage threshold while in the second current density, or the second voltage of the second cell being greater than the voltage threshold while in the second current density.

In some embodiments, the controller may be configured to determine that: the first membrane has the pinhole formed therein in response to a third voltage of the first cell being less than the voltage threshold while in the second current density and the flow of water is reversed, and/or the second membrane has the pinhole formed therein in response to a fourth voltage of the second cell being less than the voltage threshold while in the second current density and the flow of water is reversed. In some embodiments, the controller may be configured to decrease a flow rate of water through the electrolyzer cell stack in response to holding the current density at the first current density for the predetermined time period.

In some embodiments, the pinhole monitoring system may further include an external power source configured to be selectively connected to the electrolyzer cell stack. In some embodiments, the external power source may not be connected to the electrolyzer cell stack during the predetermined time period. In some embodiments, the controller may be configured to connect the external power source to the electrolyzer cell stack in response to holding the current density at the first current density for the predetermined time period.

According to a second aspect, described herein, a method of operating an electrolysis system comprises holding a current density of an electrolyzer cell stack at a first current density for a predetermined time period, the electrolyzer cell stack includes a first cell and a second cell and is configured to produce a hydrogen product gas and an oxygen product gas during the predetermined time period; decreasing the current density of the electrolyzer cell stack to a second current density in response to the predetermined time period ending; and monitoring a first voltage of the first cell and a second voltage of the second cell using a controller while in the second current density, wherein while monitoring, the controller is configured to determine that: a first membrane of the first cell has a first pinhole in response to the first voltage of the first cell being less than a voltage threshold while in the second current density, and/or a second membrane of the second cell has a second pinhole in response to the second voltage of the second cell being less than the voltage threshold while in the second current density.

In some embodiments, the method may further comprise decreasing the current density of the electrolyzer cell stack to a third current density less than the second current density in response to: the first voltage of the first cell being greater than the voltage threshold while in the second current density, or the second voltage of the second cell being greater than the voltage threshold while in the second current density.

In some embodiments, the controller may be configured to determine that: the first membrane of the first cell has the first pinhole formed therein in response to a third voltage of the first cell being less than the voltage threshold, and/or the second membrane of the second cell has the second pinhole formed therein in response to a fourth voltage of the second cell being less than the voltage threshold.

In some embodiments, the method may further comprise reversing a flow of water through the electrolyzer cell stack in response to: the first voltage of the first cell being greater than the voltage threshold while in the second current density, or the second voltage of the second cell being greater than the voltage threshold while in the second current density. In some embodiments, the method may further comprise determining that: the first membrane has the first pinhole formed therein in response to a third voltage of the first cell being less than the voltage threshold while in the second current density and the flow of water is reversed, and/or the second membrane has the second pinhole formed therein in response to a fourth voltage of the second cell being less than the voltage threshold while in the second current density and the flow of water is reversed.

In some embodiments, the method may further comprise directing water through the electrolyzer cell stack at a first flow rate while in the first current density. In some embodiments, the method may further comprise directing water through the electrolyzer cell stack at a second flow rate in response to the predetermined time period ending, wherein the second flow rate is less than the first flow rate. In some embodiments, the method may further comprise disconnecting the electrolyzer cell stack from a rectifier of the electrolysis system and connecting the electrolyzer cell stack to an external power source in response to the predetermined time period ending.

In some embodiments, the method may further comprise decreasing a pressure of the electrolyzer cell stack in response to the predetermined time period ending. In some embodiments, the second current density may be about 5 mA/cm².

### BRIEF DESCRIPTION OF THE DRAWINGS

FIG. 1A is perspective view of an electrolyzer cell stack according to the present disclosure;
FIG. 1B is a schematic view of an electrolysis system configured to utilize the electrolyzer cell stack of FIG. 1A;
FIG. 1C is a schematic view of an additional portion of the electrolysis system of FIG. 1B;
FIG. 2A is a diagrammatic view of an electrolyzer cell of the electrolyzer cell stack of FIG. 1A, the electrolyzer cell including an anode, a cathode spaced apart from the anode, and a membrane arranged between the anode and the cathode having a pinhole formed therein;
FIG. 2B. is a diagrammatic view of the electrolyzer cell of FIG. 2A showing that the pinhole increases in size over time;
FIG. 3 is a schematic view of the electrolyzer cell stack of FIG. 1A showing that a control system of a pinhole monitoring system is communicatively coupled with the electrolyzer cell stack;
FIG. 4 is a schematic view of the electrolyzer cell stack of FIG. 3 showing that the pinhole monitoring system includes an external power source configured to be coupled with the electrolyzer cell stack;
FIG. 5 is a graph showing the current density of the electrolyzer cell stack over time;
FIG. 6 is a graph showing the voltage of each of the electrolyzer cells of the electrolyzer cell stack over time as the current density is changed;
FIG. 7A is another graph showing the voltage of each of the electrolyzer cells of the electrolyzer cell stack over time as the current density is changed;
FIG. 7B is another graph showing correlations between cell voltage and current density based on threshold cell voltage or minimum cell voltage reached during an evaluation period;
FIG. 8 is a schematic view of the electrolyzer cell stack of FIG. 1A showing that a flow of water through the electrolyzer cell stack is reversed;
FIG. 9 is a schematic view of the electrolyzer cell stack of FIG. 4 showing that the electrolyzer cell stack is configured to be coupled to the external power source or a rectifier of the electrolysis system;
FIG. 10A shows part of a method of using the pinhole monitoring system to detect and monitor pinholes formed in the membranes of electrolyzer cells;
FIG. 10B shows another part of the method of FIG. 10A of using the pinhole monitoring system to detect and monitor pinholes formed in the membranes of electrolyzer cells; and
FIG. 11 shows an exemplary control system of the pinhole monitoring system.

### DETAILED DESCRIPTION

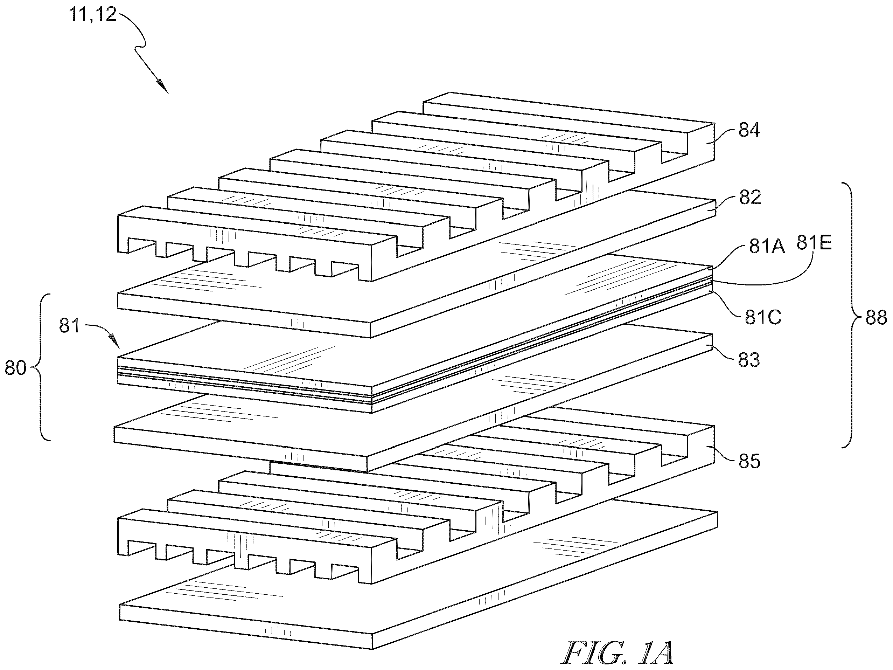

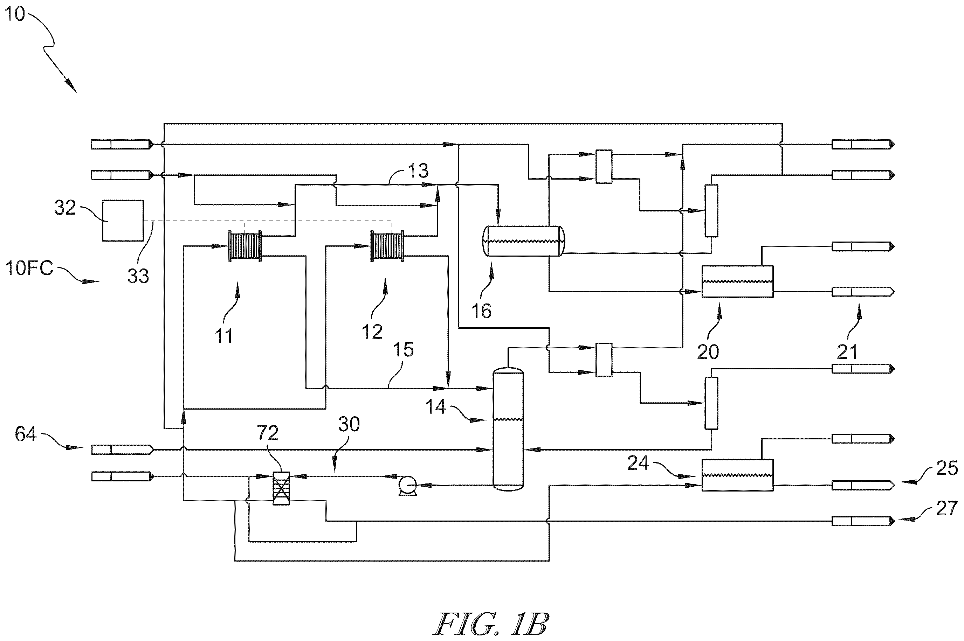

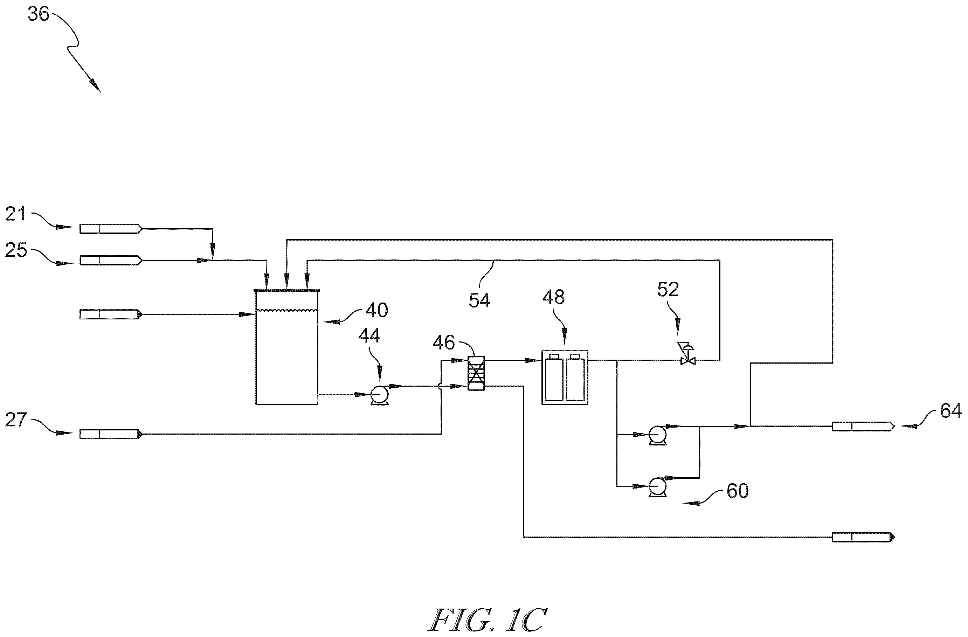

FIGS. 1B and 1C illustrate an electrolysis system 10 that is configured to produce hydrogen and oxygen from water and electricity. Electrolysis systems, like the electrolysis system 10, typically include one or more electrolyzer cells 80, as shown in FIG. 1A, that utilize electricity to chemically produce hydrogen and oxygen from water, such as deionized water 30 (shown in FIG. 1B). The electrical source for the electrolysis system 10 can be from power or energy generation systems, including renewable energy systems such as wind, solar, hydroelectric, and geothermal sources for the production of green hydrogen. In turn, hydrogen produced by the electrolysis system 10 can be utilized as a fuel or energy source for those same power generation systems, such as fuel cell systems, or can be used to produce other products, such as ammonia. The hydrogen produced by the electrolysis system 10 may be stored for later use.

The typical electrolytic or electrolyzer cell, such as the electrolytic cell 80, includes multiple assemblies compressed and bound into a single assembly. Multiple electrolyzer cells 80 may be stacked relative to each other, along with bipolar plates (BPP) 84, 85 therebetween, to form an electrolyzer cell stack (for example, electrolyzer cell stacks 11, 12 in FIGS. 1A and 1B). Each electrolyzer cell stack 11, 12 may house a plurality of electrolyzer cells 80 connected together in series and/or in parallel. The number of electrolyzer cell stacks 11, 12 in the electrolysis system 10 can vary depending on the amount of power required to meet the power need of any load (e.g., fuel cell stack). The number of electrolyzer cells 80 in an electrolyzer cell stack 11, 12 can be tailored, for example, to produce a desired amount of hydrogen or based on the amount of power required to operate the electrolysis system 10 including the electrolyzer cell stack 11, 12.

The electrolyzer cell 80 in FIG. 1A includes a multi-component membrane electrode assembly (MEA) 81 that has an electrolyte 81E, an anode 81A, and a cathode 81C. Typically, the anode 81A, the cathode 81C, and the electrolyte 81E of the MEA 81 are configured in a multilayer arrangement that enables the electrochemical reaction to produce hydrogen and/or oxygen via contact of the water with one or more gas diffusion layers (GDLs) 82, 83. Each GDL 82, 83 may also be referred to as porous transport layer (PTL), and are typically located on one or both sides of the MEA 81. Bipolar plates (BPP) 84, 85 often reside on either side of the GDLs 82, 83 and separate the individual electrolyzer cells 80 of the electrolyzer cell stack 11, 12 from one another. One bipolar plate 85 and the adjacent gas diffusion layers 82, 83 and MEA 81 can form a repeating unit 88, which can be stacked on top of other units 88 to form a cell stack 11, 12.

FIG. 1B illustrates an exemplary electrolysis system 10 including two electrolyzer cell stacks 11, 12 and a fluidic circuit 10FC, which includes various fluidic pathways shown in FIGS. 1B and 1C to circulate, inject, and purge fluid and other components to and from the electrolysis system 10. One or a variety of a number of components within the fluidic circuit 10FC, as well as more or less than two electrolyzer cell stacks 11, 12, may be utilized in the electrolysis system 10. For example, the electrolysis system 10 may include one electrolyzer cell stack 11, and in other examples, the electrolysis system 10 may include three or more electrolyzer cell stacks.

Each electrolysis system 10 may include one or more types of electrolyzer cell stacks 11, 12 therein. In the illustrated embodiment, a polymer electrolyte membrane (PEM) electrolyzer cell 80 may be utilized in the stacks 11, 12. By way of example, the PEM electrolyzer cell can operate at about 4°C to about 150°C, including any specific or range of temperatures comprised therein; and can function at about 100 bar or less, but can go up to about 1000 bar (including any specific or range of pressures comprised therein), such as to reduce the total energy demand of the system. A standard electrochemical reaction that occurs in a PEM electrolyzer cell 80 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Also, for example, a solid oxide electrolyzer cell may be utilized in the electrolysis system 10, such as where the solid oxide electrolyzer cell functions at about 500°C to about 1000°C, including any specific or range of temperatures comprised therein. A standard electrochemical reaction that occurs in a solid oxide electrolyzer cell 80 to produce hydrogen is as follows.
- Anode: 2O²⁻ → O₂ + 4e⁻
- Cathode: 2H₂O + 4e⁻ → 2H₂ + 2O²⁻
- Overall: 2H₂O (liquid/vapor) → 2H₂ + O₂

Yet another example, an anion exchange membrane (AEM) electrolyzer cell may be utilized, which may use an alkaline media. An alkaline AEM electrolyzer cell can include aqueous solutions, such as potassium hydroxide (KOH) and/or sodium hydroxide (NaOH), as the electrolyte; can perform at operating temperatures ranging from about 0°C to about 150°C, including any specific or range of temperatures comprised therein; and can operate at pressures ranging from about 1 bar to about 100 bar, including any specific or range of pressures comprised therein. A standard hydrogen-generating electrochemical reaction that occurs in an alkaline electrolyzer cell 80 is as follows.
- Anode: 4OH⁻ → O₂ + 2H₂O + 4e⁻
- Cathode: 4H₂O + 4e⁻ → 2H₂ + 4OH⁻
- Overall: 2H₂O → 2H₂ + O₂

The electrolyzer cell stacks 11, 12 of FIG. 1B can include one or more electrolyzer cells 80 that utilize electricity to chemically produce substantially pure hydrogen and oxygen from water. In turn, the pure hydrogen produced by the electrolyzer cells 80 may be utilized, for example, as a fuel or energy source, or to produce other products such as ammonia.

As shown in FIG. 1B, the electrolyzer cell stack 11, 12 outputs the produced hydrogen along a fluidic connecting line 13 to a hydrogen separator 16, and also outputs the produced oxygen along a fluidic connecting line 15 to an oxygen separator 14.

The hydrogen separator 16 may be configured to output pure hydrogen gas and also send additional output fluid to a hydrogen drain tank 20, which then outputs fluid to a deionized water drain 21. The oxygen separator 14 may output fluid to an oxygen drain tank 24, which in turn outputs fluid to a deionized water drain 25. A person skilled in the art would understand that certain inputs and outputs of fluid may be pure water or other fluids such as coolant or byproducts of the chemical reactions of the electrolyzer cell stacks 11, 12. For example, oxygen and hydrogen may flow away from the cell stacks 11, 12 to the respective separators 14, 16. The electrolysis system 10 may further include a rectifier 32 configured to convert electricity 33 flowing to the cell stacks 11, 12 from alternating current (AC) to direct current (DC).

The deionized water drains 21, 25 each output to a deionized water tank 40, which is part of a polishing loop 36 of the fluidic circuit 10FC, as shown in FIG. 1C. Water with ion content can damage electrolyzer cell stacks 11, 12 when the ionized water interacts with internal components of the electrolyzer cell stacks 11, 12. The polishing loop 36, shown in greater detail in FIG. 1C, is configured to deionize the water such that it may be utilized in the cell stacks 11, 12 and not damage the cell stacks 11, 12.

In the illustrated embodiment, the deionized water tank 40 outputs fluid, in particular water, to a deionized water polishing pump 44. The deionized water polishing pump 44 in turn outputs the water to a water polishing heat exchanger 46 for polishing and treatment. The water then flows to a deionized water resin tank 48.

Coolant is directed through the electrolysis system 10, in particular through a deionized water heat exchanger 72 that is fluidically connected to the oxygen separator 14. The coolant may also be subsequently fed to the water polishing heat exchanger 46 via a coolant input 27 for polishing. The coolant is then output back to the deionized water heat exchanger 72 for cooling the water therein.

After the water is output from the deionized water polishing heat exchanger 46 and subsequently to the deionized water resin tank 48, a portion of the water may be fed to deionized water high pressure feed pumps 60, as shown in FIG. 1C. Another portion of the water may be fed to a deionized water pressure control valve 52, as shown in FIG. 1C. The portion of the water that is fed to the deionized water pressure control valve 52 flows through a recirculation fluidic connection 54 that allows the water to flow back to the deionized water tank 40 for continued polishing.

The portion of the water that is fed to the deionized water high pressure feed pumps 60 is then output to a deionized water feed 64, which then flows into the oxygen separator 14 for recirculation and eventual reusage in the electrolyzer cell stacks 11, 12. This process may then continuously repeat.

The electrolysis system 10 described herein has particular application for use in stationary (or immovable) power systems, such as industrial applications and power generation plants. The electrolysis system 10 may also be implemented in conjunction with other electrolysis systems 10.

The present electrolysis system 10 may be comprised in mobile applications. The electrolysis system 10 may be in a vehicle or a powertrain. The vehicle or the powertrain comprising the electrolysis system 10 may be an automobile, a pass car, a bus, a truck, a train, a locomotive, an aircraft, a light duty vehicle, a medium duty vehicle, or a heavy duty vehicle.

Membranes of electrolyzer cells, such as the membrane 81E of the electrolyzer cell 80, act as a gas barrier to separate the hydrogen gas of the cathode 81C from the oxygen gas of the anode 81A so that mixing of the hydrogen gas and the oxygen gas is prevented and/or minimized. The membrane 81E also allows protons to diffuse through the membrane 81E from the anode 81A to the cathode 81C.

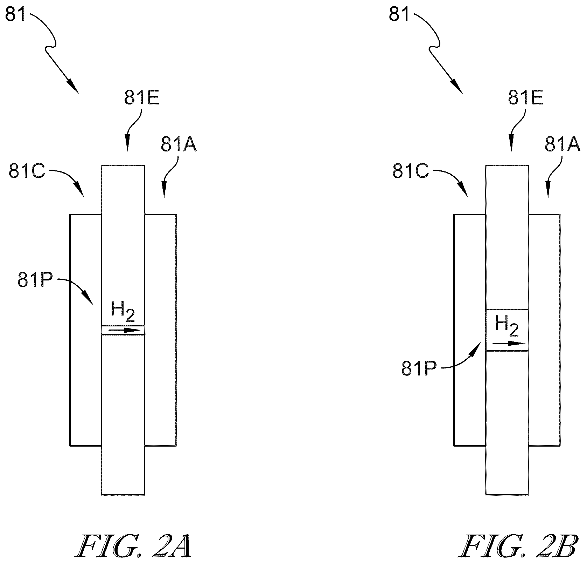

Generally, membranes of electrolyzer cells, such as the membrane 81E, are prone to forming one or more pinhole(s) 81P as the electrolyzer cell 80 ages, degrades, and/or thins, as shown in FIGS. 2A and 2B. A portion of the hydrogen gas being produced by the electrolyzer cell 80 may cross over and/or diffuse through the pinhole(s) 81P of the membrane 81E from the cathode 81C to the anode 81A. Pinholes 81P, thus, may lead to many issues within the electrolysis system 10. For example, pinholes 81P may result in a loss in hydrogen gas production efficiency and oxygen gas production efficiency. Some hydrogen gas may be lost to the anode 81A, for example, while a purity of the oxygen gas may decrease due to the crossover hydrogen gas. As another example, the pinholes 81P allow for the mixing of hydrogen gas and oxygen gas, which can trigger an autocatalytic combustion of hydrogen gas. The mixing of hydrogen gas and oxygen gas may cause an internal explosion and/or local burning of the MEA 81. As an additional example, the pinholes 81P decrease the durability of the membrane 81E.

A volume fraction of hydrogen in oxygen (HTO) represents the concentration of hydrogen gas in the oxygen gas due to crossover through the membrane 81E. The terms volume fraction, HTO, and mole fraction may be used interchangeably. The diffusion rate of the hydrogen gas through the membrane 81E via the pinholes 81P may depend on a size of the pinholes 81P, a number of the pinholes 81P, a thickness of the membrane 81E, a pressure difference between an anode compartment and a cathode compartment, and/or a material type of the membrane 81E.

Relatively small pinholes 81P are difficult to detect. Often, the pinholes 81P are not detectable until the pinholes 81P grow in size, as suggested in FIGS. 2A and 2B. FIG. 2B shows the pinhole 81P growing or having grown after about 1,000 hours of use of the electrolyzer cell 80.

In traditional electrolysis systems, an HTO sensor is coupled with the electrolyzer cell stack to detect crossover hydrogen gas. However, the HTO sensor detects the HTO for the electrolyzer cell stack as a whole. Thus, the HTO sensor is unable to detect which electrolyzer cell(s) within the electrolyzer cell stack includes the pinhole(s).

Early detection of the pinhole(s) 81P allows for monitoring of the pinhole(s) 81P and/or intervention to ensure safe operation of the electrolysis system 10. Further, detection of the pinhole(s) 81P on a cell 80-by-cell 80 basis, instead of on a stack 11, 12 basis, allows for monitoring and/or intervention at the individual electrolyzer cell 80 level.

The present disclosure provides, among other aspects, a pinhole monitoring system 110 configured to detect and monitor the pinhole(s) 81P formed in the electrolyzer cell(s) 80, 80' of the electrolyzer stack 11, 12. The pinhole monitoring system 110 indicates whether the pinhole(s) 81P is/are present in a particular cell 80, 80', whether the pinhole(s) 81P is/are absent in a particular cell 80, and/or a severity of the pinhole(s) 81P, if or when present. The pinhole monitoring system 110, thus indicates which particular cells 80, 80' have hydrogen gas crossover.

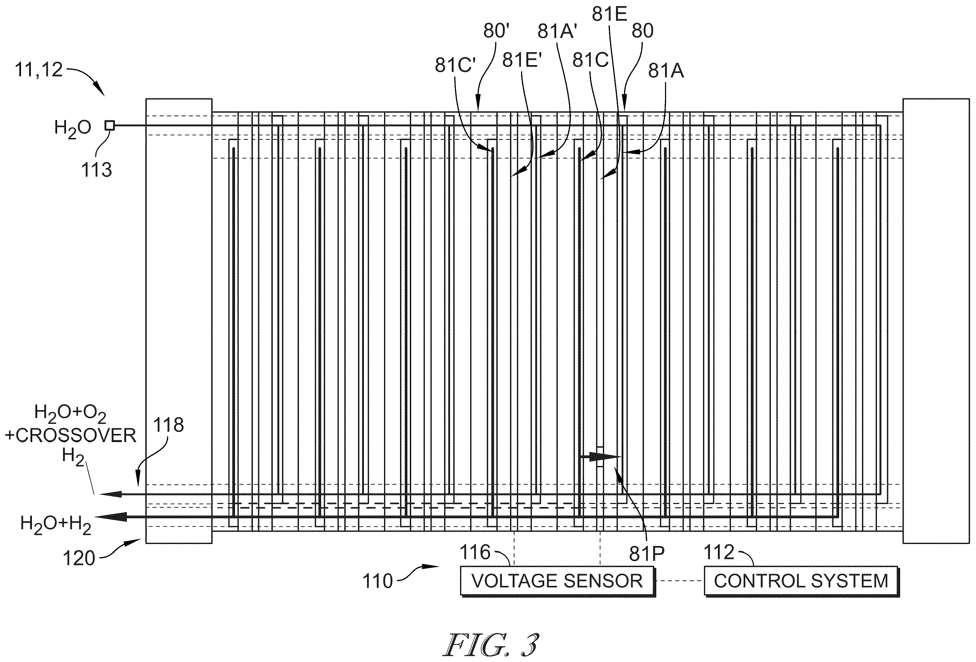

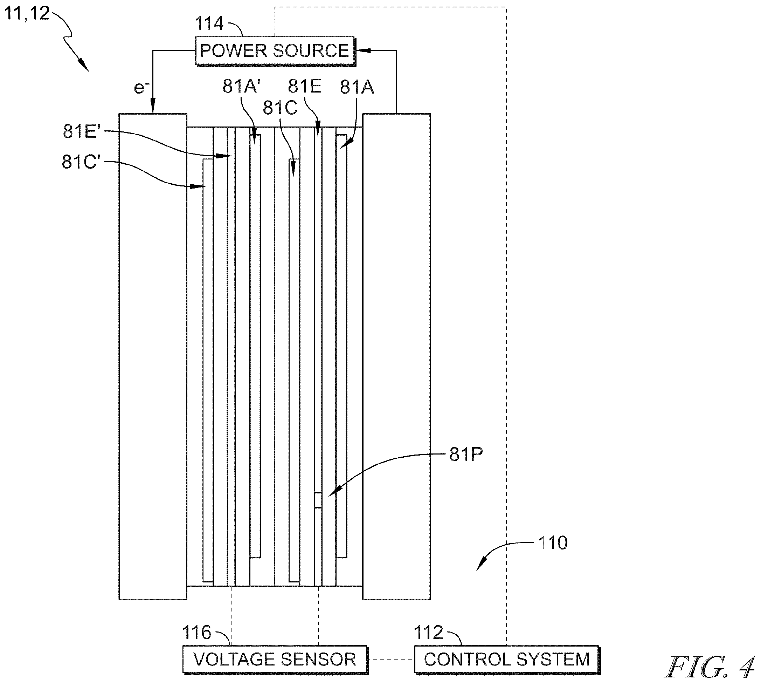

The pinhole monitoring system 110 includes a control system 112 (e.g., a controller 112) and an external power source 114, as shown in FIG. 4. The pinhole monitoring system 110 is used with an electrolysis system, such as the electrolysis system 10. As shown in FIGS. 3 and 4, the electrolyzer cell stack 11, 12 includes at least two electrolyzer cells 80, 80'. The first cell 80 includes a first anode 81A, a first cathode 81C, and a first membrane 81E, as previously described in relation to FIG. 1A. The first cathode 81C is spaced apart from the first anode 81A, and the first membrane 81E is arranged therebetween. The second cell 80' includes a second anode 81A', a second cathode 81C', and a second membrane 81E'. The second cathode 81C' is spaced apart from the second anode 81A', and the second membrane 81E' is arranged therebetween. The first anode 81A, the first cathode 81C, and the first membrane 81E are identical to the second anode 81A', the second cathode 81C', and the second membrane 81E', respectively.

As shown in FIGS. 3 and 4, the first membrane 81E of the first cell 80 includes a pinhole 81P, and the second membrane 81E' of the second cell 80' does not include a pinhole 81P. Water is directed through the electrolyzer cell stack 11, 12 in a first direction, as shown in FIG. 3. A hydrogen product gas is output from the electrolyzer cell stack 11, 12 that includes residual water, and an oxygen product gas is output from the electrolyzer cell stack 11, 12 that includes residual water and crossover hydrogen gas due to diffusion through the first membrane 81E and convection and diffusion through the pinhole 81P in the first membrane 81E.

The pinhole monitoring system 110 monitors the first membrane 81E and the second membrane 81E' to detect the pinhole 81P formed therein. Any number of membranes (and, thus, cells 80, 80') may be simultaneously and/or concurrently monitored by the pinhole monitoring system 110.

The control system 112 is configured to operate the electrolyzer cell stack 11, 12 under normal operating conditions to produce the hydrogen product gas and the oxygen product gas. The control system 112 holds a current density of the electrolyzer cell stack 11, 12 at a first current density for a predetermined time period. In some embodiments, the first current density is about 1.0 to about 2.0 A/cm², including any specific or range of current densities comprised therein. The term "about" in the context of current densities with units of A/cm² includes plus or minus 0.2 A/cm². In some embodiments, the predetermined time period ranges from about 30 minutes to about two hours, including any specific or range of time comprised therein. In some embodiments, the predetermined time period ranges from about 30 minutes to about 1 hour, including any specific or range of time comprised therein. The predetermined time period depends, at least in part, on a size of the electrolyzer cell stack 11, 12 (i.e., the number of cells 80, 80' comprised therein).

The electrolyzer cell stack 11, 12 is held at the first current density while the electrolyzer cell stack 11, 12 is at a rated pressure, for example, about 30 bar. In some embodiments, the rated pressure ranges from about 25 bar to about 35 bar, including any specific or range of pressures comprised therein. While at the first current density, the electrolyzer cell stack 11, 12 generates the hydrogen product gas and the oxygen product gas. Thus, if or when there is a pinhole 81P present, a portion of the hydrogen product gas will cross over the membrane 81E to mix with the oxygen product gas.

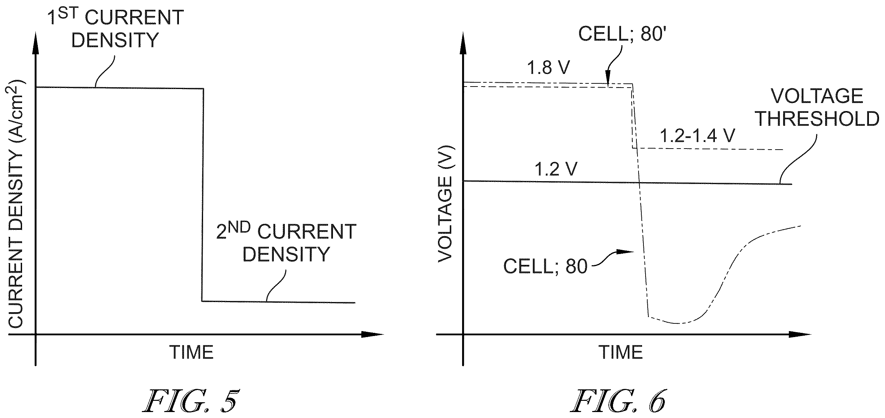

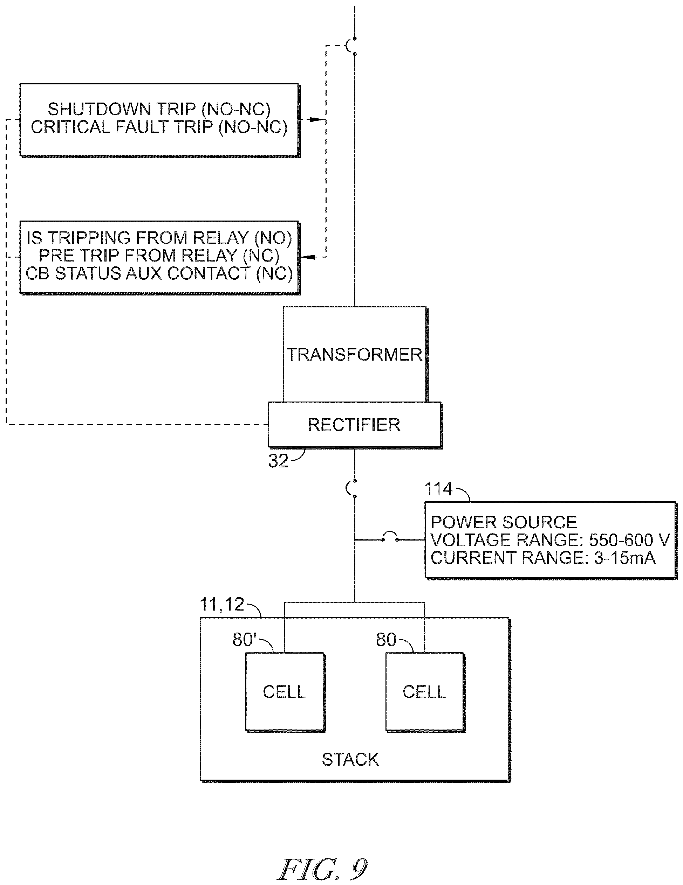

While at the first current density, the rectifier 32, as shown in FIGS. 1B and 9, provides electricity and/or power to the electrolyzer cell stack 11, 12. The control system 112 receives voltage data from a voltage sensor 116, for example, as shown in FIGS. 3 and 4. The voltage sensor 116 calculates and/or determines the voltage of the cells 80, 80'. The control system 112 receives voltage data from the voltage sensor 116. As shown in FIGS. 5 and 6, while the electrolyzer cell stack 11, 12 is held at the first current density, the first cell 80 has a first voltage and the second cell 80' has a second voltage. Both the first and second voltages are about 1.8 V.

After the predetermined time period ends (for example, after 30 minutes expires), the control system 112 decreases the pressure of the electrolyzer cell stack 11, 12. For example, the control system 112 decreases the pressure at the anode 81A, 81A' to about 1 bar and decreases the pressure at the cathode 81C, 81C' to about 3 bar. The control system 112 then decreases the current while maintaining the flow of water through the electrolyzer cell stack 11, 12 in the first direction. The control system 112 also disconnects the electrolyzer cell stack 11, 12 from the rectifier 32, as suggested in FIG. 9, and connects the electrolyzer cell stack 11, 12 to the external power source 114. In some embodiments, the external power source 114 is a DC power source. The external power source 114 is external to the electrolysis system 10.

After the electrolyzer cell stack 11, 12 is connected to the external power source 114, the control system 112 decreases the current density of the electrolyzer cell stack 11, 12 to a second current density, as shown in FIG. 5. The second current density is less than the first current density. The second current density ranges from about 2 mA/cm² to about 20 mA/cm², including any specific or range of current densities comprised therein. The term "about" in the context of current densities with units of mA/cm² includes plus or minus 2 mA/cm². The electrolyzer cell stack 11, 12 cannot safely run at such current densities while at the rated pressure of about 30 bar. Thus, as previously described, the control system 112 decreases the pressure of the electrolyzer cell stack 11, 12.

In some embodiments, the control system 112 incrementally decreases and/or lowers the current density. For example, the control system 112 decreases the current density of the electrolyzer cell stack 11, 12 to the second current density, and the second current density is about 20 mA/cm². While at the second current density, the control system 112 compares a third voltage and a fourth voltage of the first cell 80 and the second cell 80', respectively, to a voltage threshold. If or when the third voltage of the first cell 80 is less than the voltage threshold while in the second current density, then the control system 112 determines that the first membrane 81E has the pinhole 81P formed therein. If or when the fourth voltage of the second cell 80' is less than the voltage threshold while in the second current density, then the control system 112 determines that the second membrane 81E' has the pinhole 81P formed therein. Hydrogen ingress in the anode 81A, 81A' creates a mixed potential, which lowers the cell 80, 80' voltage below the normal value. The control system 112, thus, is operable to detect whether each cell 80, 80' has the pinhole(s) 81P formed therein. In some embodiments, the control system 112 determines that neither cell 80, 80' has the pinhole(s) 81P formed therein. In some embodiments, the control system 112 determines that both cells 80, 80' have the pinhole(s) 81P formed therein. In some embodiments, the control system determines that only one of the cells 80, 80' has the pinhole(s) 81P formed therein.

In some embodiments, the voltage threshold is about 0.8 V to about 1.4 V, including any specific or range of voltages comprised therein. In some embodiments, the voltage threshold is about 1.0 V. In some embodiments, the voltage threshold is about 1.1 V. In some embodiments, the voltage threshold is about 1.2 V. In some embodiments, the voltage threshold is about 1.3 V. In some embodiments, the voltage threshold is about 1.4 V.

In some embodiments, while in the second current density (i.e., after the predetermined time period ends and once the external power source 114 is connected to the electrolyzer cell stack 11, 12), the flow of water through the electrolyzer cell stack 11, 12 is decreased from a first flow rate to a second flow rate. The first flow rate is the flow rate of water through the stack 11, 12 during normal operation of the stack 11, 12. The second flow rate is less than the first flow rate. The decrease in the flow rate to the second flow rate increases the impact of hydrogen ingress in the anode 81A, 81A' and decreases the voltage of the cell 80, 80' to an even lower value. In other words, the decrease in the flow rate has a beneficial effect on pinhole 81P detection sensitivity. If or when the flow rate is too high (i.e., the first flow rate), then the flow of water dilutes the crossover hydrogen gas that passes through the membrane 81E such that the HTO is decreased. Thus, it is easier to detect smaller pinholes 81P after the flow rate is decreased to the second flow rate so that the crossover hydrogen gas is not excessively diluted.

If or when at least one of the third voltage and the fourth voltage is greater than the voltage threshold, then the control system 112 decreases the current density of the electrolyzer cell stack 11, 12 to a third current density that is less than the second current density. In some embodiments, the control system 112 decreases the current density to the third current density even if or when both the third and fourth voltages are less than the voltage threshold. For example, in some embodiments, the third current density is about 10 mA/cm². While in the third current density, the control system 112 compares a fifth voltage and a sixth voltage of the first cell 80 and the second cell 80', respectively, to the voltage threshold. In some embodiments, if or when the control system 112 already determined that the cell 80 or the cell 80' has the pinhole(s) 81P formed therein, then the control system 112 does not make further determinations regarding that cell 80, 80'. For example, if or when the control system 112 already determined that the third voltage of the first cell 80 while at the second current density was less than the voltage threshold, then the control system 112 does not perform further determinations for the first cell 80 at lower current densities.

In some embodiments, the control system 112 makes further determinations regarding the cells 80, 80' even if or when the control system 112 already determined that the cell 80 or the cell 80' has the pinhole(s) 81P formed therein. For example, if or when the control system 112 already determined that the third voltage of the first cell 80 while at the second current density was less than the voltage threshold, then the control system 112 still performs further determinations for the first cell 80 at lower current densities. This redetermination allows for more accurate assessment and/or determinations of the size of the pinhole(s) 81P by the control system 112.

If or when the fifth voltage of the first cell 80 is less than the voltage threshold while in the third current density (and the third voltage was greater than the voltage threshold), then the control system 112 determines that the first membrane 81E has the pinhole 81P formed therein. If or when the sixth voltage of the second cell 80' is less than the voltage threshold while in the third current density (and the fourth voltage was greater than the voltage threshold), then the control system 112 determines that the second membrane 81E' has the pinhole 81P formed therein.

If or when at least one of the fifth voltage and the sixth voltage is greater than the voltage threshold, then the control system 112 decreases the current density of the electrolyzer cell stack 11, 12 to a fourth current density that is less than the third current density. In some embodiments, the control system 112 decreases the current density to the fourth current density even if or when both the fifth and sixth voltages are less than the voltage threshold. For example, in some embodiments, the fourth current density is about 5 mA/cm². While at the fourth current density, the control system 112 compares a seventh voltage and an eighth voltage of the first cell 80 and the second cell 80', respectively, to the voltage threshold. In some embodiments, if or when the control system 112 already determined the cell 80 or the cell 80' has the pinhole(s) 81P formed therein, then the control system 112 does not make further determinations regarding that cell 80, 80'.

In some embodiments, the control system 112 makes further determinations regarding the cells 80, 80' even if or when the control system 112 already determined that the cell 80 or the cell 80' has the pinhole(s) 81P formed therein. For example, if or when the control system 112 already determined that the fifth voltage of the first cell 80 while at the third current density was less than the voltage threshold, then the control system 112 still performs further determinations for the first cell 80 at lower current densities.

If or when the seventh voltage of the first cell 80 is less than the voltage threshold while in the fourth current density (and the third and fifth voltages were greater than the voltage threshold), then the control system 112 determines that the first membrane 81E has the pinhole 81P formed therein. If or when the eighth voltage of the second cell 80' is less than the voltage threshold while in the fourth current density (and the fourth and sixth voltages were greater than the voltage threshold), then the control system 112 determines that the second membrane 81E' has the pinhole 81P formed therein.

As shown in FIGS. 5 and 6, as an example, when the current density of the electrolyzer cell stack 11, 12 is decreased to the fourth current density, the seventh voltage of the first cell 80 is less than the voltage threshold, and the eighth voltage of the second cell 80' is not less than the voltage threshold. The voltage profiles of the two cells 80, 80' are different from one another, indicating that the first cell 80 is unhealthy and the second cell 80' is healthy. In other words, the first cell 80 has the pinhole 81P formed in the membrane 81E thereof, and the second cell 80' does not have the pinhole 81P formed in the membrane 81E' thereof.

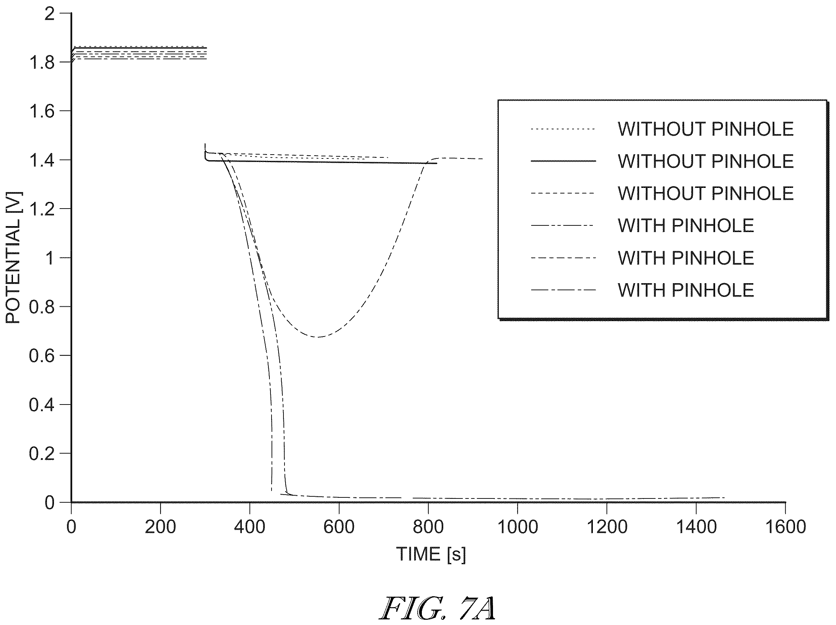

FIG. 7A shows voltage profiles of six cells 80, 80' when the current density of the electrolyzer cell stack 11, 12 is decreased to about 2.5 mA/cm². The three cells 80, 80' with the pinhole 81P have a different voltage profile than the three cells 80, 80' without the pinhole 81P.

For healthy cells (i.e., the second cell 80', for example, having the eighth voltage that is greater than the voltage threshold while at the fourth current density), the electrolysis (i.e., the chemical reaction within the cell 80') begins at about 1.2 V. If hydrogen gas is crossing over the membrane 81E through the pinhole 81P, then the mixed potential of the cell 80 decreases such that the reaction begins at less than about 1.2 V. Specifically, after the decrease in the current density, hydrogen gas ingress leads to a change in the potential of the cell 80. Hydrogen gas crossing over the membrane 81E to the anode 81A may contribute to an increase in bubble population (the total volume occupied by the bubbles is larger with the hydrogen gas flux to the anode 81A). Thus, the seventh voltage of the cell 80 being less than the voltage threshold indicates that the pinhole 81P is formed within the cell 80.

The control system 112 incrementally decreases and/or lowers the current density of the electrolyzer cell stack 11, 12 to determine the severity of the pinhole(s) 81P. For example, if or when a membrane 81E, 81E' has a relatively large pinhole or a relatively high density of pinhole(s) 81P formed therein, then the cell 80, 80' will have a voltage less than the voltage threshold at higher current densities (i.e., the second current density of 20 mA/cm², for example). A relatively large pinhole 81P may refer to a pinhole 81P having a diameter of about 500 µm to about 700 µm. If or when a membrane 81E, 81E' has a relatively small pinhole or a relatively small density of pinhole(s) 81P formed therein, then the cell 80, 80' will not have a voltage less than the voltage threshold at higher current densities (i.e., the second current density of 20 mA/cm², for example). A relatively small pinhole 81P may refer to a pinhole 81P having a diameter of about 300 µm to about 500 µm. However, if or when a membrane 81E, 81E' has a relatively small pinhole or a relatively small density of pinhole(s) 81P formed therein, then the cell 80, 80' will have a voltage less than the voltage threshold at lower current densities (i.e., the third or the fourth current densities of 10 mA/cm² or 5 mA/cm², for example). The current density at which the cell 80, 80' has a voltage less than the voltage threshold is, thus, indicative of and correlated with the severity of the pinhole(s) 81P.

The larger the size of the pinhole(s) 81P or the higher the density of pinhole(s) 81P, the smaller the change in current density needs to be to cause the voltage of the cell 80, 80' to be below the voltage threshold. In other words, a smaller delta or difference in current density (i.e., the delta between the first current density and the second, third, or fourth current density) will result in the voltage being below the voltage threshold. Thus, the smaller the delta in current density that results in the voltage being below the voltage threshold, the more severe the damage to or degradation of the membrane 81E, 81E' of the cell 80, 80'.

The control system 112 performs a scan of various current densities and the voltage profile at each of the various current densities (for example, 20 mA/cm², 10 mA/cm², and 5 mA/cm²). As an example, if or when the first cell 80 has the seventh voltage that is below the voltage threshold at the fourth current density (but not below the voltage threshold at the second or third current density), while a third cell has a voltage below the voltage threshold at the second current density, the membrane of the third cell is more severely damaged or degraded than the membrane 81E of the first cell 80. In this example, if or when the voltage of the second cell 80' is not below the voltage threshold at any of the current densities, then the membrane 81E' of the second cell 80' is not damaged or degraded. Thus, the control system 112 scans various current densities to determine which cells 80, 80' within the stack 11, 12 are damaged and which cells 80, 80' within the stack 11, 12 are most severely damaged.

If or when the voltage of the cell 80, 80' is below the voltage threshold at any current density, the control system 112 flags the specific cell 80, 80'. The control system 112 issues a warning that the specific cell 80, 80' is damaged and also indicates the severity of the damage based on the current density that resulted in the voltage being below the voltage threshold. The warning is output to an operator. The operator can schedule a maintenance event or check operation of the cell 80, 80' during the next scheduled maintenance event.

For example, the control system 112 stores the specific cell 80, 80' and the current density at which the specific cell 80, 80' had the voltage below the voltage threshold. The control system 112 can rank which cell 80, 80' should be repaired first (i.e., the cell 80, 80' with the most damage). The control system 112 can also calculate and/or determine how much time the cell 80, 80' may continue to operate based on the severity of the damage. Based on the severity of the damage, the cell 80, 80' may be removed from the stack 11, 12 and repaired or replaced. For example, if or when the cell 80, 80' has a voltage less than the voltage threshold at the second current density (for example, 20 mA/cm²), then the cell 80, 80' may be removed and repaired or replaced. As another example, if or when the cell 80, 80' only has a voltage less than the voltage threshold at or below the fourth current density (for example, 5 mA/cm²), then the cell 80, 80' may continue to operate for a set number of hours as the damage is not yet severe. The cell 80, 80' will continue to be monitored using the pinhole monitoring system 110.

It will be understood that even though three incremental current densities are disclosed herein (i.e., 20 mA/cm², 10 mA/cm², 5 mA/cm²), any number of incremental current densities may be used and tested by the pinhole monitoring system 110. For example, the pinhole monitoring system 110 may monitor the voltage profiles of the cells 80, 80' at about 20 mA/cm², 15 mA/cm², 10 mA/cm², 5 mA/cm², and 2 mA/cm², as examples.

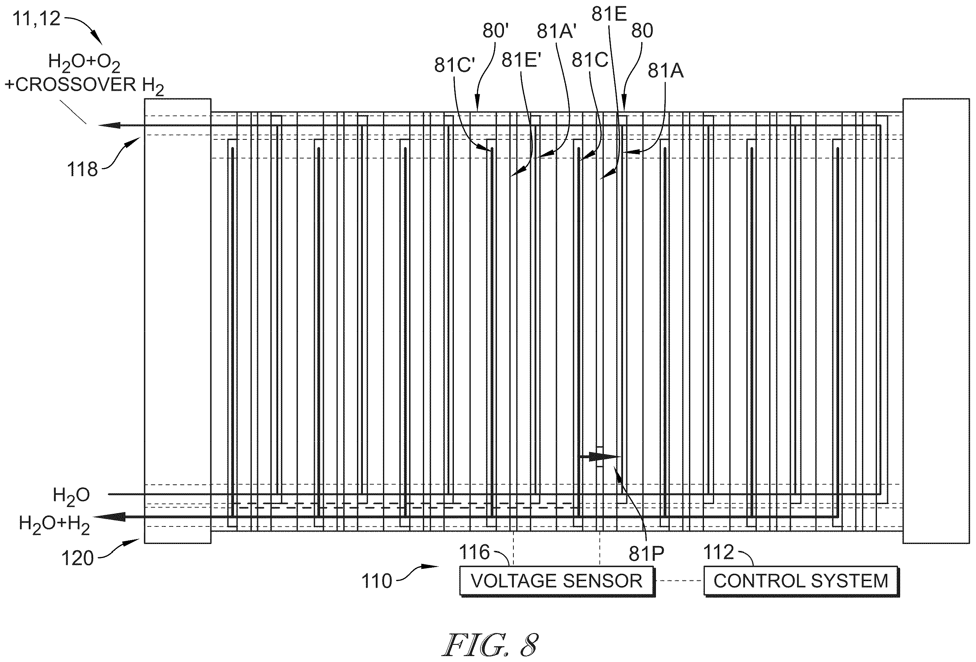

In some embodiments, if or when at least one of the cells 80, 80' does not have a voltage less than the voltage threshold at any of the second, third, and fourth current densities, then the control system 112 is configured to reverse the flow of water through the electrolyzer cell stack 11, 12, as shown in FIG. 8. In some embodiments, if or when the control system 112 already determined the cell 80 or the cell 80' has the pinhole 81P formed therein, then the control system 112 does not make further determinations regarding that cell 80, 80'. In such an embodiment, the flow of water is changed from the first direction, as shown in FIG. 3, to a second direction opposite the first direction, as shown in FIG. 8. The control system 112 then retests each of the second, third, and fourth current densities as described above.

In some embodiments, even if or when each of the cells 80, 80' has a voltage less than the voltage threshold at each of the second, third, and fourth current densities, the control system 112 is configured to reverse the flow of water through the electrolyzer cell stack 11, 12. In such an embodiment, the flow of water is changed from the first direction, as shown in FIG. 3, to the second direction opposite the first direction, as shown in FIG. 8. The control system 112 then retests each of the second, third, and fourth current densities as described above. This redetermination allows for more accurate assessment and/or determinations of the size of the pinhole(s) 81P.

In some embodiments, instead of or in addition to reversing the water direction, a pressure difference between the cathode 81C, 81C' and the anode 81A, 81A' is altered. A higher pressure difference between the cathode 81C, 81C' and the anode 81A, 81A' (with the higher of the pressures being at the cathode 81C, 81C') may increase the hydrogen convective and diffusive flow through the pinhole 81P, 81P', thus leading to increased detection sensitivity. The higher pressure being at the cathode 81C, 81C' favors gas transfer to the anode 81A, 81A'.

However, the pressure difference may need to be monitored and limited as it may lead to the formation or exacerbation of pinholes 81P, 81P' and/or tears due to increased mechanical stresses. In other words, the pressure difference may need to be monitored and limited so that the detection method does not create or propagate the pinholes 81P, 81P'. The pressure difference is dependent, at least in part, on the membrane 81E, 81E' and the operating conditions of the electrolysis system 10.

For example, operation at a higher temperature can soften the membrane 81E, 81E', which would promote the creation and/or propagation of the pinholes 81P, 81P'. A higher temperature may also decrease gas viscosity, increase the flow rate through the pinhole 81P, 81P', and increase detection sensitivity. Thus, the pressure difference is dependent on the membrane 81E, 81E' and the operating conditions of the electrolysis system 10. In some embodiments, the pressure difference may be gradually increased similarly to the gradual decrease in the current density.

In some embodiments, instead of or in addition to reversing the water direction, a pressure difference between the cathode 81C, 81C' and the anode 81A, 81A' is altered (with the higher of the pressures being at the anode 81A, 81A'). The cell voltage may be more variable when the higher of the pressures is at the anode 81A, 81A' because the anode 81A, 81A' and part of the cathode 81C, 81C' may be exposed to oxygen and accompanying reactions, which may affect the cell voltage change and pinhole 81P, 81P' location identification.

If or when the pinhole 81P formed in the membrane 81E, 81E' is in closer proximity to an oxygen gas outlet 118 than a hydrogen gas outlet 120, as shown in FIG. 3, then the pinhole 81P may not be detected by the pinhole monitoring system 110 while the flow of water is in the first direction. For example, if or when the pinhole 81P is located near the oxygen gas outlet 118, a minimal impact on the voltage is expected at lower current densities. Thus, the flow of water is reversed to the second direction to maximize the voltage response at lower current densities, as shown in FIG. 8.

In some embodiments, a pump 113 configured to pump water through the electrolyzer cell stack 11, 12 is a bidirectional pump 113 that can reverse the flow of water to flow in a second direction (e.g., an opposite direction or a different direction than the flow of water). In some embodiments, the electrolyzer cell stack 11, 12 has additional piping and valves for use when the flow of water is reversed to the second direction.

As an example, the control system 112 changes the current density of the electrolyzer cell stack 11, 12 to the second current density, and the voltage profile of the cells 80, 80' is monitored. While at the second current density with the flow of water in the second direction, the control system 112 compares a ninth voltage and a tenth voltage of the first cell 80 and the second cell 80', respectively, to the voltage threshold. If or when the ninth voltage of the first cell 80 is less than the voltage threshold while in the second current density and the flow of water is in the second direction, then the control system 112 determines that the first membrane 81E has the pinhole 81P formed therein. If or when the tenth voltage of the second cell 80' is less than the voltage threshold while in the second current density and the flow of water is in the second direction, then the control system 112 determines that the second membrane 81E' has the pinhole 81P formed therein.

In some embodiments, if or when at least one of the ninth voltage and the tenth voltage is greater than the voltage threshold, then the control system 112 decreases the current density of the electrolyzer cell stack 11, 12 to the third current density while the flow of water is in the second direction. While in the third current density, the control system 112 compares an eleventh voltage and a twelfth voltage of the first cell 80 and the second cell 80', respectively, to the voltage threshold. In some embodiments, the control system 112 decreases the current density of the electrolyzer cell stack 11, 12 to the third current density while the flow of water is in the second direction even if or when the ninth voltage and the tenth voltage are less than the voltage threshold.

If or when the eleventh voltage of the first cell 80 is less than the voltage threshold while in the third current density and the flow of water is in the second direction, then the control system 112 determines that the first membrane 81E has the pinhole 81P formed therein. If or when the twelfth voltage of the second cell 80' is less than the voltage threshold while in the third current density and the flow of water is in the second direction, then the control system 112 determines that the second membrane 81E' has the pinhole 81P formed therein.

In some embodiments, if or when at least one of the eleventh voltage and the twelfth voltage is greater than the voltage threshold, then the control system 112 decreases the current density of the electrolyzer cell stack 11, 12 to the fourth current density. While in the fourth current density with the flow of water in the second direction, the control system 112 compares a thirteenth voltage and a fourteenth voltage of the first cell 80 and the second cell 80', respectively, to the voltage threshold. In some embodiments, the control system 112 decreases the current density of the electrolyzer cell stack 11, 12 to the fourth current density while the flow of water is in the second direction even if or when the eleventh voltage and the twelfth voltage are less than the voltage threshold.

If or when the thirteenth voltage of the first cell 80 is less than the voltage threshold while in the fourth current density and the flow of water is in the second direction, then the control system 112 determines that the first membrane 81E has the pinhole 81P formed therein. If or when the fourteenth voltage of the second cell 80' is less than the voltage threshold while in the fourth current density and the flow of water is in the second direction, then the control system 112 determines that the second membrane 81E' has the pinhole 81P formed therein.

The pinhole monitoring system 110 may detect pinholes 81P that have a size less than about 0.1% of a total active area of the membrane 81E. The pinhole monitoring system 110 may detect pinholes 81P that have a diameter of about 300 µm to about 700 µm, including any specific or range of diameters comprised therein. The pinhole monitoring system 110 may detect pinholes 81P that have a diameter of about 500 µm.

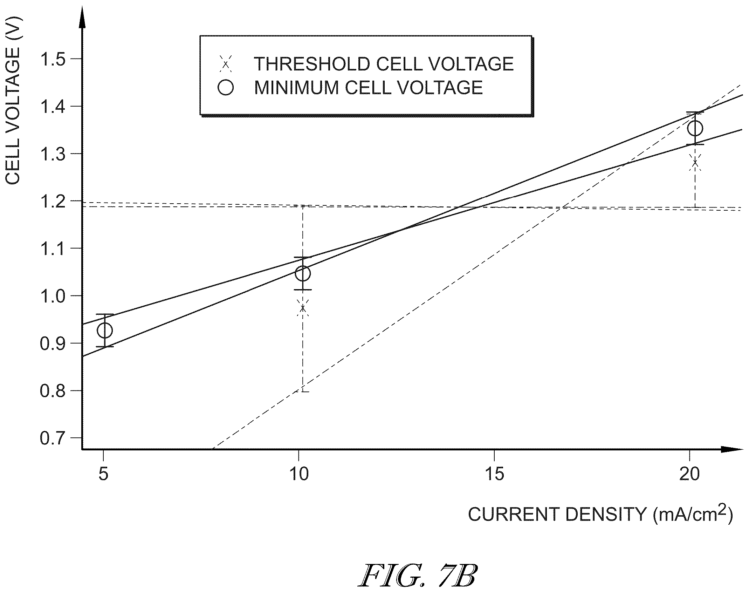

In some embodiments, the control system 112 uses the voltage threshold to determine the presence or absence of the pinhole(s) 81P. For example, as previously described, the detected voltage for the cell 80' without the pinhole 81P may be from about 1.2 V to about 1.4 V, and the detected voltage for the cell 80 with the pinhole 81P may be from about 0.8 V to about 1.2 V. As shown in FIG. 7B, the error associated with a correlation may be large as indicated by the two extreme curves encompassing these variations in cell voltage. In contrast, the error associated with a cell voltage measurement such as a minimum value is much smaller leading to a tighter variation in the correlation.

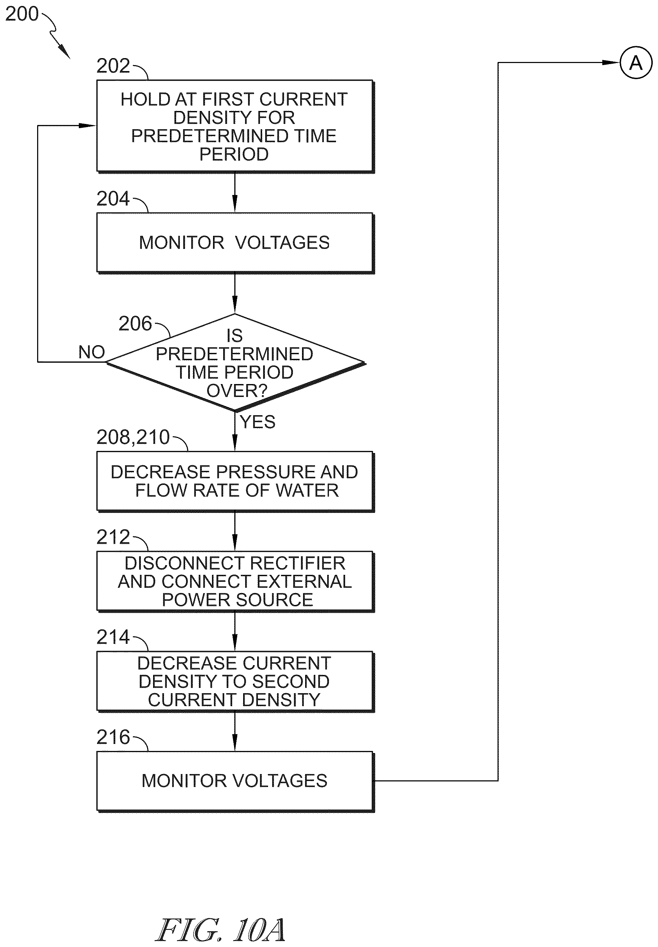

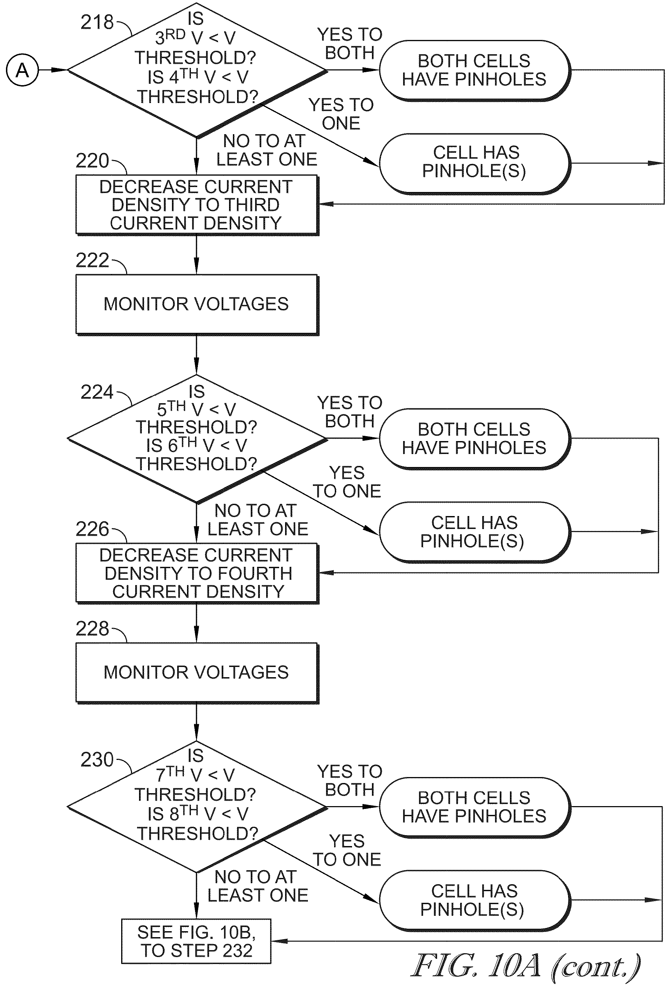

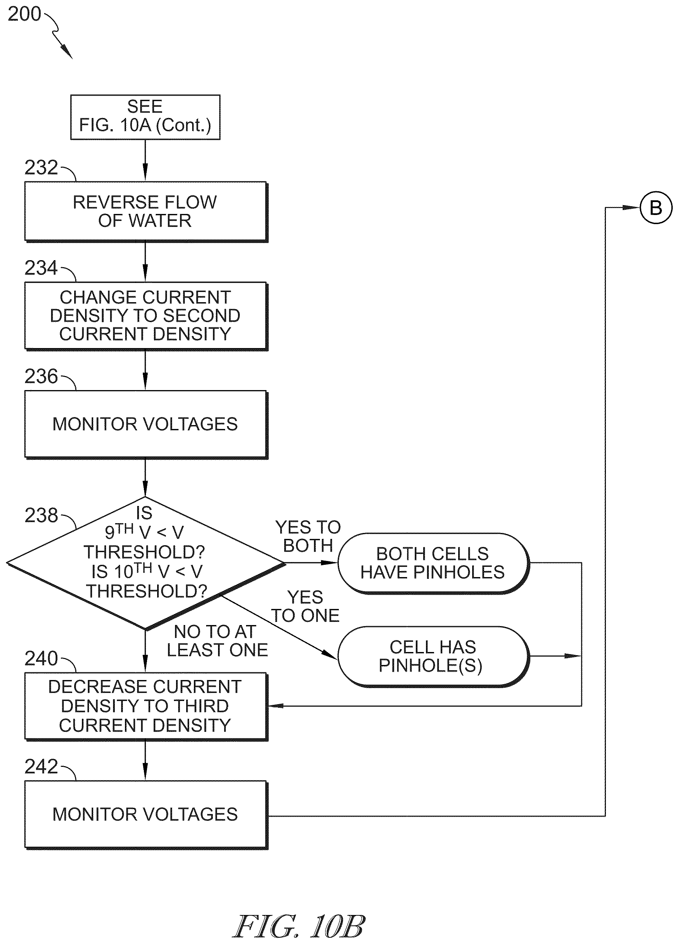

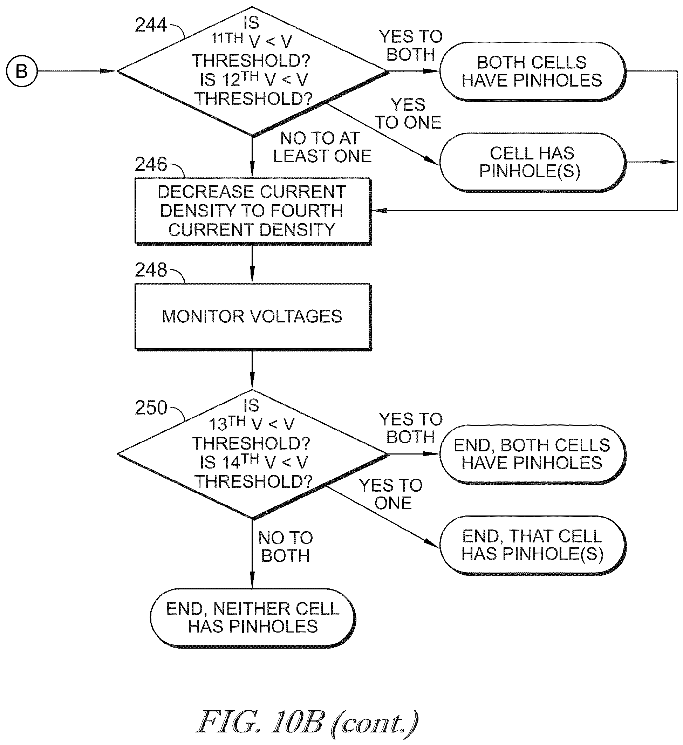

As shown in FIGS. 10A and 10B, a method 200 for using the pinhole monitoring system 110 is provided. In step 202, the current density of the electrolyzer cell stack 11, 12 is held at the first current density for the predetermined time period while the electrolyzer cell stack 11, 12 generates hydrogen product gas and oxygen product gas. During step 202, the electrolyzer cell stack 11, 12 is at the rated pressure. In step 204, the first voltage of the first cell 80 and the second voltage of the second cell 80' are monitored. In decision step 206, the control system 112 determines if or when the predetermined time period is over. If or when the predetermined time period is not over ("NO"), the control system 112 continues to operate the electrolyzer cell stack 11, 12 at the first current density. If or when the predetermined time period is over (i.e., the predetermined time period has ended or lapsed, "YES"), then the control system 112 proceeds to step 208.

In step 208, the pressure at the anode 81A, 81A' and the cathode 81C, 81C' is decreased. In step 210, the flow of water through the electrolyzer cell stack 11, 12 is decreased to the second flow rate from the first flow rate. In step 212, the rectifier 32 is disconnected from the electrolyzer cell stack 11, 12 and the external power source 114 is connected to the electrolyzer cell stack 11, 12.

In step 214, the current density of the electrolyzer cell stack 11, 12 is decreased to the second current density. In step 216, the third voltage of the first cell 80 and the fourth voltage of the second cell 80' are monitored. In decision step 218, the control system 112 compares the third voltage and the fourth voltage to the voltage threshold. In decision step 218, if or when the third voltage is less than the voltage threshold, the control system 112 determines that the first membrane 81E of the first cell 80 has the pinhole 81P formed therein. In decision step 218, if or when the fourth voltage is less than the voltage threshold, the control system 112 determines that the second membrane 81E' of the second cell 80' has the pinhole 81P formed therein.

In decision step 218, the control system 112 may determine that both the third and the fourth voltages are less than the voltage threshold ("YES TO BOTH") such that both membranes 81E, 81E' have the pinhole(s) 81P formed therein. If or when this is found, in some embodiments, the method 200 ends. In some embodiments, the method 200 continues such that a determination is made at each current density to assess the size and severity of the pinhole(s) 81P. In decision step 218, the control system 112 may determine that only one of the third and the fourth voltages is less than the voltage threshold ("YES TO ONE") such that only one of the membranes 81E, 81E' has the pinhole(s) 81P formed therein. If or when this is found, in some embodiments, the method 200 ends for that cell 80, 80' having the pinhole 81P formed therein, but proceeds for the cell 80, 80' that does not have the pinhole 81P formed therein. In some embodiments, the method 200 continues such that a determination is made at each current density to assess the size and severity of the pinhole(s) 81P. In decision step 218, in some embodiments, if or when the control system 112 determines that at least one of (or both of) the third and the fourth voltages is greater than the voltage threshold ("NO TO AT LEAST ONE") the method 200 proceeds to step 220. In some embodiments, the method 200 proceeds to step 220 even if or when both the third and the fourth voltages are less than the voltage threshold.

In step 220, the control system 112 decreases the current density of the electrolyzer cell stack 11, 12 to the third current density. In step 222, the fifth voltage of the first cell 80 and the sixth voltage of the second cell 80' are monitored. In decision step 224, the control system 112 compares the fifth voltage and the sixth voltage to the voltage threshold. In decision step 224, if or when the fifth voltage is less than the voltage threshold, the control system 112 determines that the first membrane 81E of the first cell 80 has the pinhole 81P formed therein. In decision step 224, if or when the sixth voltage is less than the voltage threshold, the control system 112 determines that the second membrane 81E' of the second cell 80' has the pinhole 81P formed therein.

In decision step 224, the control system 112 may determine that both the fifth and the sixth voltages are less than the voltage threshold ("YES TO BOTH") such that both membranes 81E, 81E' have the pinhole(s) 81P formed therein. If or when this is found, in some embodiments, the method 200 ends. In some embodiments, the method 200 continues such that a determination is made at each current density to assess the size and severity of the pinhole(s) 81P. In decision step 224, the control system 112 may determine that only one of the fifth and the sixth voltages is less than the voltage threshold ("YES TO ONE") such that only one of the membranes 81E, 81E' has the pinhole(s) 81P formed therein. If or when this is found, in some embodiments, the method 200 ends for that cell 80, 80' having the pinhole 81P formed therein, but proceeds for the cell 80, 80' that does not have the pinhole 81P formed therein. In some embodiments, the method 200 continues such that a determination is made at each current density to assess the size and severity of the pinhole(s) 81P. In decision step 224, in some embodiments, if or when the control system 112 determines that at least one of (or both of) the fifth and the sixth voltages is greater than the voltage threshold ("NO TO AT LEAST ONE") the method 200 proceeds to step 226. In some embodiments, the method 200 proceeds to step 226 even if or when both the fifth and the sixth voltages are less than the voltage threshold.

In step 226, the control system 112 decreases the current density of the electrolyzer cell stack 11, 12 to the fourth current density. In step 228, the seventh voltage of the first cell 80 and the eighth voltage of the second cell 80' are monitored. In decision step 230, the control system 112 compares the seventh voltage and the eighth voltage to the voltage threshold. In decision step 230, if or when the seventh voltage is less than the voltage threshold, the control system 112 determines that the first membrane 81E of the first cell 80 has the pinhole 81P formed therein. In decision step 230, if or when the eighth voltage is less than the voltage threshold, the control system 112 determines that the second membrane 81E' of the second cell 80' has the pinhole 81P formed therein.

In decision step 230, the control system 112 may determine that both the seventh and the eighth voltages are less than the voltage threshold ("YES TO BOTH") such that both membranes 81E, 81E' have the pinhole(s) 81P formed therein. If or when this is found, in some embodiments, the method 200 ends. In some embodiments, the method 200 continues such that a determination is made at each current density to assess the size and severity of the pinhole(s) 81P. In decision step 230, the control system 112 may determine that only one of the seventh and the eighth voltages is less than the voltage threshold ("YES TO ONE") such that only one of the membranes 81E, 81E' has the pinhole(s) 81P formed therein. If or when this is found, in some embodiments, the method 200 ends for that cell 80, 80' having the pinhole 81P formed therein, but proceeds for the cell 80, 80' that does not have the pinhole 81P formed therein. In some embodiments, the method 200 continues such that a determination is made at each current density to assess the size and severity of the pinhole(s) 81P. In decision step 230, in some embodiments, if or when the control system 112 determines that at least one of (or both of) the seventh and the eighth voltages is greater than the voltage threshold ("NO TO AT LEAST ONE") the method 200 proceeds to step 232, as shown in FIG. 10B. In some embodiments, the method 200 proceeds to step 232 even if or when both the seventh and the eighth voltages are less than the voltage threshold.

The method 200 may include additional steps to continue decreasing the current density of the electrolyzer cell stack 11, 12 and comparing the voltages to the voltage threshold prior to reaching step 232. In step 232, the control system 112 reverses the flow of water through the electrolyzer cell stack 11, 12 from the first direction to the second direction. In some embodiments, instead of or in addition to reversing the water direction, a pressure difference between the cathode 81C, 81C' and the anode 81A, 81A' is altered. In some embodiments, the pressure difference may be gradually increased similarly to the gradual decrease in the current density.

In step 234, the current density of the electrolyzer cell stack 11, 12 is changed to the second current density. In step 236, the ninth voltage of the first cell 80 and the tenth voltage of the second cell 80' are monitored. In decision step 238, the control system 112 compares the ninth voltage and the tenth voltage to the voltage threshold. In decision step 238, if or when the ninth voltage is less than the voltage threshold, the control system 112 determines that the first membrane 81E of the first cell 80 has the pinhole 81P formed therein. In decision step 238, if or when the tenth voltage is less than the voltage threshold, the control system 112 determines that the second membrane 81E' of the second cell 80' has the pinhole 81P formed therein.

In decision step 238, the control system 112 may determine that both the ninth and the tenth voltages are less than the voltage threshold ("YES TO BOTH") such that both membranes 81E, 81E' have the pinhole(s) 81P formed therein. If or when this is found, in some embodiments, the method 200 ends. In some embodiments, the method 200 continues such that a determination is made at each current density to assess the size and severity of the pinhole(s) 81P. In decision step 238, the control system 112 may determine that only one of the ninth and the tenth voltages is less than the voltage threshold ("YES TO ONE") such that only one of the membranes 81E, 81E' has the pinhole(s) 81P formed therein. If or when this is found, in some embodiments, the method 200 ends for that cell 80, 80' having the pinhole 81P formed therein, but proceeds for the cell 80, 80' that does not have the pinhole 81P formed therein.

In some embodiments, the method 200 continues such that a determination is made at each current density to assess the size and severity of the pinhole(s) 81P. In decision step 238, in some embodiments, if or when the control system 112 determines that at least one of (or both of) the ninth and the tenth voltages is greater than the voltage threshold ("NO TO AT LEAST ONE") the method 200 proceeds to step 240. In some embodiments, the method 200 proceeds to step 240 even if or when both the ninth and the tenth voltages are less than the voltage threshold.

In step 240, the control system 112 decreases the current density of the electrolyzer cell stack 11, 12 to the third current density. In step 242, the eleventh voltage of the first cell 80 and the twelfth voltage of the second cell 80' are monitored. In decision step 244, the control system 112 compares the eleventh voltage and the twelfth voltage to the voltage threshold. In decision step 244, if or when the eleventh voltage is less than the voltage threshold, the control system 112 determines that the first membrane 81E of the first cell 80 has the pinhole 81P formed therein. In decision step 244, if or when the twelfth voltage is less than the voltage threshold, the control system 112 determines that the second membrane 81E' of the second cell 80' has the pinhole 81P formed therein.

In decision step 244, the control system 112 may determine that both the eleventh and the twelfth voltages are less than the voltage threshold ("YES TO BOTH") such that both membranes 81E, 81E' have the pinhole(s) 81P formed therein. If or when this is found, in some embodiments, the method 200 ends. In some embodiments, the method 200 continues such that a determination is made at each current density to assess the size and severity of the pinhole(s) 81P. In decision step 244, the control system 112 may determine that only one of the eleventh and the twelfth voltages is less than the voltage threshold ("YES TO ONE") such that only one of the membranes 81E, 81E' has the pinhole(s) 81P formed therein. If or when this is found, in some embodiments, the method 200 ends for that cell 80, 80' having the pinhole 81P formed therein, but proceeds for the cell 80, 80' that does not have the pinhole 81P formed therein.

In some embodiments, the method 200 continues such that a determination is made at each current density to assess the size and severity of the pinhole(s) 81P. In decision step 244, in some embodiments, if or when the control system 112 determines that at least one of (or both of) the eleventh and the twelfth voltages is greater than the voltage threshold ("NO TO AT LEAST ONE") the method 200 proceeds to step 246. In some embodiments, the method 200 proceeds to step 246 even if or when both the eleventh and the twelfth voltages are less than the voltage threshold.

In step 246, the control system 112 decreases the current density of the electrolyzer cell stack 11, 12 to the fourth current density. In step 248, the thirteenth voltage of the first cell 80 and the fourteenth voltage of the second cell 80' are monitored. In decision step 250, the control system 112 compares the thirteenth voltage and the fourteenth voltage to the voltage threshold. In decision step 250, if or when the thirteenth voltage is less than the voltage threshold, the control system 112 determines that the first membrane 81E of the first cell 80 has the pinhole 81P formed therein. In decision step 250, if or when the fourteenth voltage is less than the voltage threshold, the control system 112 determines that the second membrane 81E' of the second cell 80' has the pinhole 81P formed therein.

In decision step 250, the control system 112 may determine that both the thirteenth and the fourteenth voltages are less than the voltage threshold ("YES TO BOTH") such that both membranes 81E, 81E' have the pinhole(s) 81P formed therein. In decision step 250, the control system 112 may determine that only one of the thirteenth and the fourteenth voltages is less than the voltage threshold ("YES TO ONE") such that only one of the membranes 81E, 81E' has the pinhole(s) 81P formed therein. In decision step 250, if or when the control system 112 determines that both of the thirteenth and the fourteenth voltages is greater than the voltage threshold ("NO TO BOTH"), then neither of the membranes 81E, 81E' has the pinhole(s) 81P formed therein.

The method 200 may include additional steps of adjusting the current density while the flow of water is in the second direction and monitoring the voltage at each current density. The method 200 may be ordered differently than the order described above and shown in FIGS. 10A and 10B.

The method 200 may be performed periodically as part of a health check of the electrolysis system 10. The method 200 may include additional steps of removing, repairing, and/or replacing membranes 81E, 81E' of the cells 80, 80'.

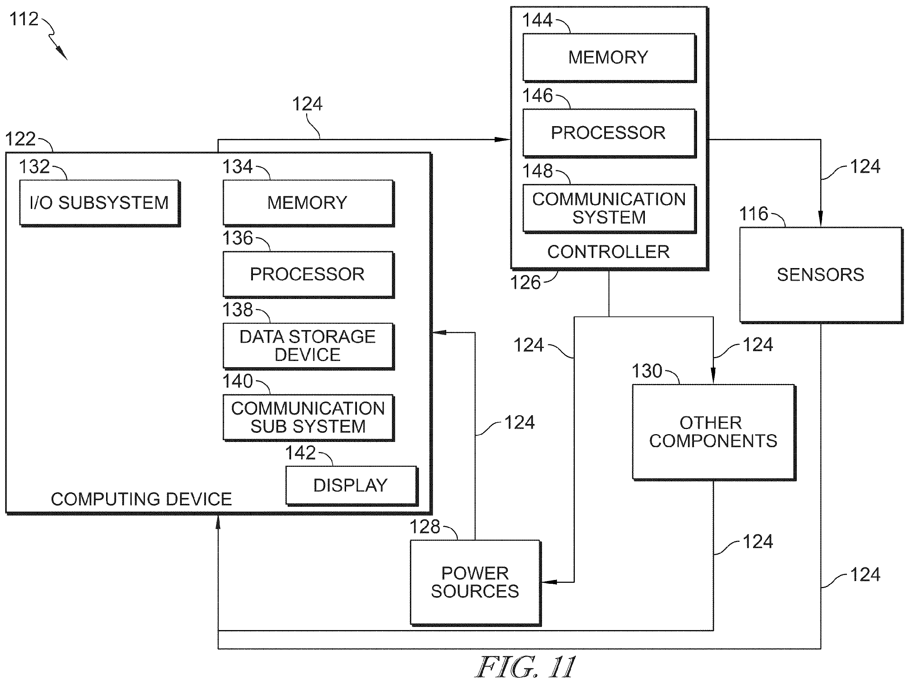

As shown in FIG. 11, in some embodiments, the control system 112 includes a computing device 122 in communication over a network 124 with other components of the control system 112 including, but not limited to, a controller 126, one or more power sources 128 in the electrolysis system 10, and other components 130 of the electrolysis system 10 that determine function and performance.

The computing device 122 may be embodied as any type of computation or computer device capable of performing the functions described herein, including, but not limited to, a server (e.g., stand-alone, rack-mounted, blade, etc.), a network appliance (e.g., physical or virtual), a high-performance computing device, a web appliance, a distributed computing system, a computer, a processor-based system, a multiprocessor system, a smartphone, a tablet computer, a laptop computer, a notebook computer, and a mobile computing device.

The illustrative computing device 122 of FIG. 11 may include one or more of an input/output (I/O) subsystem 132, a memory 134, a processor 136, a data storage device 138, a communication subsystem 140, and a display 142 that may be connected to each other, in communication with each other, and/or configured to be connected and/or in communication with each other through wired, wireless, and/or power line connections and associated protocols (e.g., Ethernet, InfiniBand^{®}, Bluetooth^{®}, Wi-Fi^{®}, WiMAX, 3G, 4G LTE, 5G, etc.).

The computing device 122 may also include additional and/or alternative components, such as those commonly found in a computer (e.g., various input/output devices). In other embodiments, one or more of the illustrative computing device 122 components may be incorporated in, or otherwise form a portion of, another component. For example, the memory 134, or portions thereof, may be incorporated in the processor 136.

The processor 136 may be embodied as any type of computational processing tool or equipment capable of performing the functions described herein. For example, the processor 136 may be embodied as a single or multi-core processor(s), digital signal processor, microcontroller, or other processor, or processing/controlling circuit. The memory 134 may be embodied as any type of volatile or non-volatile memory or data storage capable of performing the functions described herein.

In operation, the memory 134 may store various data and software used during operation of the computing device 122 such as operating systems, applications, programs, libraries, and drivers. The memory 134 is communicatively coupled to the processor 136 via the I/O subsystem 132, which may be embodied as circuitry and/or components to facilitate input/output operations with the processor 136, the memory 134, and other components of the computing device 122.

For example, the I/O subsystem 132 may be embodied as, or otherwise include, memory controller hubs, input/output control hubs, sensor hubs, host controllers, firmware devices, communication links (i.e., point-to-point link, bus links, wires, cables, light guides, printed circuit board traces, etc.) and/or other components and subsystems to facilitate the input/output operations.

In one embodiment, the memory 134 may be directly coupled to the processor 136, for example, via an integrated memory controller hub. Additionally, in some embodiments, the I/O subsystem 132 may form a portion of a system-on-a-chip (SoC) and be incorporated, along with the processor 136, the memory 134, and/or other components of the computing device 122, on a single integrated circuit chip (not shown).

The data storage device 138 may be embodied as any type of device or devices configured for short-term or long-term storage of data such as, for example, memory devices and circuits, memory cards, hard disk drives, solid-state drives, or other data storage devices. The computing device 122 also includes the communication subsystem 140, which may be embodied as any communication circuit, device, or collection thereof, capable of enabling communications between the computing device 122 and other remote devices over the network 124.

The components of the communication subsystem 140 may be configured to use any one or more communication technologies (e.g., wired, wireless and/or power line communications) and associated protocols (e.g., Ethernet, InfiniBand^{®}, Bluetooth^{®}, Wi-Fi^{®}, WiMAX, 3G, 4G LTE, 5G, etc.) to effect such communication among and between system components and devices. The controller 126, the power sources 128, the computing device 122, and additional features or components 130 of the electrolysis system 10 may be connected, communicate with each other, and/or configured to be connected or in communication with each over the network 124 using one or more communication technologies (e.g., wired, wireless and/or power line communications) and associated protocols (e.g., Ethernet, InfiniBand^{®}, Bluetooth^{®}, Wi-Fi^{®}, WiMAX, 3G, 4G LTE, 5G, etc.).

The computing device 122 may also include any number of additional input/output devices, interface devices, hardware accelerators, and/or other peripheral devices. The computing device 122 of the control system 112 of the electrolysis system 10 may be configured into separate subsystems for managing data and coordinating communications throughout the electrolysis system 10.

The display 142 of the computing device 122 may be embodied as any type of display capable of displaying digital and/or electronic information, such as a liquid crystal display (LCD), a light emitting diode (LED), a plasma display, a cathode ray tube (CRT), or other type of display device. In some embodiments, the display 142 may be coupled to or otherwise include a touch screen or other input device.

In one embodiment, the operations of the control system 112 are generated by the processor 136 based on several inputs, and applied or implemented by the controller 126 to affect the functioning of the electrolysis system 10. The inputs are provided by the voltage sensor 116, for example. In one embodiment, the operations of the control system 112 are generated by the processor 136 based on several inputs, and applied or implemented by the controller 126 in real time and/or automatically to affect the functioning of the electrolysis system 10. In one embodiment, the controller 126 is in the same computing device 122. In other embodiments, the controller 126 may include a memory 144, a processor 146, and/or a communication system 148, as previously described.

The following described aspects of the present invention are contemplated and nonlimiting:
A first aspect of the present invention relates to an electrolysis system. The electrolysis system comprises an electrolyzer cell stack and a pinhole monitoring system. The electrolyzer cell stack is configured to use water and electricity to produce a hydrogen product gas and an oxygen product gas. The electrolyzer cell stack comprises a first cell and a second cell. The first cell has a first anode, a first cathode spaced apart from the first anode, and a first membrane arranged between the first anode and the first cathode. The second cell has a second anode, a second cathode spaced apart from the second anode, and a second membrane arranged between the second anode and the second cathode. The pinhole monitoring system is configured to monitor the first membrane and the second membrane to detect a pinhole formed therein. The pinhole monitoring system includes a controller configured to hold a current density of the electrolyzer cell stack at a first current density for a predetermined time period; decrease the current density of the electrolyzer cell stack to a second current density in response to holding the current density at the first current density for the predetermined time period; and determine that: the first membrane has the pinhole formed therein in response to a first voltage of the first cell being less than a voltage threshold while in the second current density, and/or the second membrane has the pinhole formed therein in response to a second voltage of the second cell being less than the voltage threshold while in the second current density.

A second aspect of the present invention relates to a method of operating an electrolysis system. The method comprises holding a current density of an electrolyzer cell stack at a first current density for a predetermined time period, the electrolyzer cell stack includes a first cell and a second cell and is configured to produce a hydrogen product gas and an oxygen product gas during the predetermined time period; decreasing the current density of the electrolyzer cell stack to a second current density in response to the predetermined time period ending; and monitoring a first voltage of the first cell and a second voltage of the second cell using a controller while in the second current density, wherein while monitoring, the controller is configured to determine that: a first membrane of the first cell has a first pinhole in response to the first voltage of the first cell being less than a voltage threshold while in the second current density, and/or a second membrane of the second cell has a second pinhole in response to the second voltage of the second cell being less than the voltage threshold while in the second current density.

In the first aspect of the present invention, the first current density may be about 1.0 to about 2.0 A/cm². In the first aspect of the present invention, the second current density may be about 5 mA/cm². In the first aspect of the present invention, the voltage threshold may be about 0.8 V to about 1.4 V. In the first aspect of the present invention, the controller may be configured to decrease the current density of the electrolyzer cell stack to a third current density less than the second current density in response to: the first voltage of the first cell being greater than the voltage threshold while in the second current density, or the second voltage of the second cell being greater than the voltage threshold while in the second current density.

In the first aspect of the present invention, the controller may be configured to determine that: the first membrane has the pinhole formed therein in response to a third voltage of the first cell being less than the voltage threshold while in the third current density, and/or the second membrane has the pinhole formed therein in response to a fourth voltage of the second cell being less than the voltage threshold while in the third current density. In the first aspect of the present invention, the controller may be configured to reverse a flow of water through the electrolyzer cell stack in response to: the first voltage of the first cell being greater than the voltage threshold while in the second current density, or the second voltage of the second cell being greater than the voltage threshold while in the second current density.

In the first aspect of the present invention, the controller may be configured to determine that: the first membrane has the pinhole formed therein in response to a third voltage of the first cell being less than the voltage threshold while in the second current density and the flow of water is reversed, and/or the second membrane has the pinhole formed therein in response to a fourth voltage of the second cell being less than the voltage threshold while in the second current density and the flow of water is reversed. In the first aspect of the present invention, the controller may be configured to decrease a flow rate of water through the electrolyzer cell stack in response to holding the current density at the first current density for the predetermined time period.

In the first aspect of the present invention, the pinhole monitoring system may further include an external power source configured to be selectively connected to the electrolyzer cell stack. In the first aspect of the present invention, the external power source may not be connected to the electrolyzer cell stack during the predetermined time period. In the first aspect of the present invention, the controller may be configured to connect the external power source to the electrolyzer cell stack in response to holding the current density at the first current density for the predetermined time period.

In the second aspect of the present invention, the method may further comprise decreasing the current density of the electrolyzer cell stack to a third current density less than the second current density in response to: the first voltage of the first cell being greater than the voltage threshold while in the second current density, or the second voltage of the second cell being greater than the voltage threshold while in the second current density.

In the second aspect of the present invention, the controller may be configured to determine that: the first membrane of the first cell has the first pinhole formed therein in response to a third voltage of the first cell being less than the voltage threshold, and/or the second membrane of the second cell has the second pinhole formed therein in response to a fourth voltage of the second cell being less than the voltage threshold.

In the second aspect of the present invention, the method may further comprise reversing a flow of water through the electrolyzer cell stack in response to: the first voltage of the first cell being greater than the voltage threshold while in the second current density, or the second voltage of the second cell being greater than the voltage threshold while in the second current density. In the second aspect of the present invention, the method may further comprise determining that: the first membrane has the first pinhole formed therein in response to a third voltage of the first cell being less than the voltage threshold while in the second current density and the flow of water is reversed, and/or the second membrane has the second pinhole formed therein in response to a fourth voltage of the second cell being less than the voltage threshold while in the second current density and the flow of water is reversed.

In the second aspect of the present invention, the method may further comprise directing water through the electrolyzer cell stack at a first flow rate while in the first current density. In the second aspect of the present invention, the method may further comprise directing water through the electrolyzer cell stack at a second flow rate in response to the predetermined time period ending, wherein the second flow rate is less than the first flow rate. In the second aspect of the present invention, the method may further comprise disconnecting the electrolyzer cell stack from a rectifier of the electrolysis system and connecting the electrolyzer cell stack to an external power source in response to the predetermined time period ending.

In the second aspect of the present invention, the method may further comprise decreasing a pressure of the electrolyzer cell stack in response to the predetermined time period ending. In the second aspect of the present invention, the second current density may be about 5 mA/cm².

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical, and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic, or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

While only certain features of the invention have been illustrated and described herein, many modifications and changes will occur to those skilled in the art. It is, therefore, to be understood that the appended claims are intended to cover all such modifications and changes as fall within the scope of the invention.

## Claims

1. An electrolysis system comprising:
an electrolyzer cell stack configured to use water and electricity to produce a hydrogen product gas and an oxygen product gas, the electrolyzer cell stack comprising:
a first cell having a first anode, a first cathode spaced apart from the first anode, and a first membrane arranged between the first anode and the first cathode; and
a second cell having a second anode, a second cathode spaced apart from the second anode, and a second membrane arranged between the second anode and the second cathode; and
a pinhole monitoring system configured to monitor the first membrane and the second membrane to detect a pinhole formed therein, the pinhole monitoring system including a controller configured to:
hold a current density of the electrolyzer cell stack at a first current density for a predetermined time period;
decrease the current density of the electrolyzer cell stack to a second current density in response to holding the current density at the first current density for the predetermined time period; and
determine that:
the first membrane has the pinhole formed therein in response to a first voltage of the first cell being less than a voltage threshold while in the second current density, and/or
the second membrane has the pinhole formed therein in response to a second voltage of the second cell being less than the voltage threshold while in the second current density.

2. The electrolysis system of claim 1, wherein the first current density is about 1.0 to about 2.0 A/cm² and/or wherein the second current density is about 5 mA/cm².

3. The electrolysis system of claim 1 or 2, wherein the voltage threshold is about 0.8 V to about 1.4 V.

4. The electrolysis system of any preceding claim, wherein the controller is configured to decrease the current density of the electrolyzer cell stack to a third current density less than the second current density in response to:
the first voltage of the first cell being greater than the voltage threshold while in the second current density, or
the second voltage of the second cell being greater than the voltage threshold while in the second current density;
optionally, wherein the controller is configured to determine that:
the first membrane has the pinhole formed therein in response to a third voltage of the first cell being less than the voltage threshold while in the third current density, and/or
the second membrane has the pinhole formed therein in response to a fourth voltage of the second cell being less than the voltage threshold while in the third current density.

5. The electrolysis system of any preceding claim, wherein the controller is configured to reverse a flow of water through the electrolyzer cell stack in response to:
the first voltage of the first cell being greater than the voltage threshold while in the second current density, or
the second voltage of the second cell being greater than the voltage threshold while in the second current density;
optionally, wherein the controller is configured to determine that:
the first membrane has the pinhole formed therein in response to a third voltage of the first cell being less than the voltage threshold while in the second current density and the flow of water is reversed, and/or
the second membrane has the pinhole formed therein in response to a fourth voltage of the second cell being less than the voltage threshold while in the second current density and the flow of water is reversed.

6. The electrolysis system of any preceding claim, wherein the controller is configured to decrease a flow rate of water through the electrolyzer cell stack in response to holding the current density at the first current density for the predetermined time period.

7. The electrolysis system of any preceding claim, wherein the pinhole monitoring system further includes an external power source configured to be selectively connected to the electrolyzer cell stack, wherein the external power source is not connected to the electrolyzer cell stack during the predetermined time period, and the controller is configured to connect the external power source to the electrolyzer cell stack in response to holding the current density at the first current density for the predetermined time period.

8. A method of operating an electrolysis system, the method comprising:
holding a current density of an electrolyzer cell stack at a first current density for a predetermined time period, the electrolyzer cell stack including a first cell and a second cell and is configured to produce a hydrogen product gas and an oxygen product gas during the predetermined time period;
decreasing the current density of the electrolyzer cell stack to a second current density in response to the predetermined time period ending; and
monitoring a first voltage of the first cell and a second voltage of the second cell using a controller while in the second current density, wherein while monitoring, the controller is configured to determine that:
a first membrane of the first cell has a first pinhole in response to the first voltage of the first cell being less than a voltage threshold while in the second current density, and/or
a second membrane of the second cell has a second pinhole in response to the second voltage of the second cell being less than the voltage threshold while in the second current density.

9. The method of claim 8, further comprising decreasing the current density of the electrolyzer cell stack to a third current density less than the second current density in response to:
the first voltage of the first cell being greater than the voltage threshold while in the second current density, or
the second voltage of the second cell being greater than the voltage threshold while in the second current density;
optionally, wherein the controller is configured to determine that:
the first membrane of the first cell has the first pinhole formed therein in response to a third voltage of the first cell being less than the voltage threshold, and/or
the second membrane of the second cell has the second pinhole formed therein in response to a fourth voltage of the second cell being less than the voltage threshold.

10. The method of claim 8 or 9, further comprising reversing a flow of water through the electrolyzer cell stack in response to:
the first voltage of the first cell being greater than the voltage threshold while in the second current density, or
the second voltage of the second cell being greater than the voltage threshold while in the second current density.

11. The method of claim 10, further comprising determining that:
the first membrane has the first pinhole formed therein in response to a third voltage of the first cell being less than the voltage threshold while in the second current density and the flow of water is reversed, and/or
the second membrane has the second pinhole formed therein in response to a fourth voltage of the second cell being less than the voltage threshold while in the second current density and the flow of water is reversed.

12. The method of any of claims 8 to 11, further comprising directing water through the electrolyzer cell stack at a first flow rate while in the first current density;
optionally, further comprising directing water through the electrolyzer cell stack at a second flow rate in response to the predetermined time period ending, wherein the second flow rate is less than the first flow rate.

13. The method of any of claims 8 to 12, further comprising disconnecting the electrolyzer cell stack from a rectifier of the electrolysis system and connecting the electrolyzer cell stack to an external power source in response to the predetermined time period ending.

14. The method of any of claims 8 to 13, further comprising decreasing a pressure of the electrolyzer cell stack in response to the predetermined time period ending.

15. The method of any of claims 8 to 14, wherein the second current density is about 5 mA/cm².
